(19)

**Europäisches Patentamt**
**European Patent Office**
**Office européen des brevets**

(11) **EP 4 749 876 A1**

(12) **EUROPEAN PATENT APPLICATION**

(43) Date of publication:
**27.05.2026 Bulletin 2026/22**

(21) Application number: **24214196.8**

(22) Date of filing: **20.11.2024**

(51) International Patent Classification (IPC):
**H02J 7/00** (2026.01)   **B60L 58/16** (2019.01)
**B60L 58/18** (2019.01)

(52) Cooperative Patent Classification (CPC):
**H02J 7/50; B60L 58/16; B60L 58/18; H02J 7/82;**
**H02J 7/84; H02J 7/933;** B60L 2240/549

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **HALLBERG, Linus**
**423 73 SÄVE (SE)**
• **ALTAF, Faisal**
**421 43 VÄSTRA FRÖLUNDA (SE)**

(74) Representative: **Kransell & Wennborg KB**
**P.O. Box 2096**
**403 12 Göteborg (SE)**

Remarks:
Amended claims in accordance with Rule 137(2)
EPC.

(54) **MULTI-BATTERY PACK STATE OF POWER (SOP) SELECTION**

(57)   A method of controlling an ESS is provided, including obtaining lower state-of-power (SoP) values ($SoP_{low,i}$) for multiple battery packs (130-1 to 130-4) of an energy storage system (ESS); obtaining one or more first values ($SoQ_1, \ldots, SoQ_4$) indicative of a current storage capacity and/or a current resistance of each battery pack; determining, based on the obtained first values, that the current storage capacity ($SoQ_4$) of a battery pack (130-4) is significantly larger than those of the one or more other battery packs and/or that the current resistance of the battery pack is significantly smaller than those of the one or more other battery packs, and controlling a discharging and/or charging of the ESS ($SoP_{ESS}$) such that the battery pack may operate exceeding its lower SoP value ($SoP_{low,4}$) and the other batteries in accordance with their lower SoP values ($SoP_{low,i}$). A corresponding computer system, ESS, vehicle, computer program and storage-medium are also provided.

Fig. 3

## Description

### TECHNICAL FIELD

The disclosure relates generally to the field of battery energy storage systems (ESSs or BESSs), such as those used in electric vehicles. In particular aspects, the disclosure relates to a control system for controlling the discharging and/or charging of an ESS with inhomogeneous battery pack properties. The disclosure can e.g. be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Energy storage systems (ESSs) may use a plurality of battery packs to store electric energy, and are found in for example electric vehicles, power banks for home and/or grid usage, and similar. To guarantee predictability, it is often desirable that the performance of the ESS remains approximately constant over the lifetime of the ESS. However, as contemporary battery packs are known to degrade with time, both due to being used and due to so-called calendar aging, providing an ESS whose performance remains constant may be a challenging problem.

One conventional solution is to lock the performance of the ESS to a limit decided based on an expected end-of-life (EoL) performance of the battery packs, i.e. such that a beginning-of-life (BoL) performance of the ESS is intentionally limited to be close to or at the expected EoL performance of the ESS, such that a user of the ESS will not experience any noticeable degradation of performance over the lifetime of the ESS. However, such a solution also prevents the user from using the true capabilities of the ESS, especially at or close to its BoL, the knowledge of which may reduce the user experience. Another solution is to simply do nothing, and let the user experience an ESS performance that will be greater at the BoL and then gradually reduce towards the EoL of the ESS, which may also result in a less-than-optimal user experience.

If the BoL performance of the ESS is locked to its expected EoL performance, another issue may for example arise (or be amplified) if one or more battery packs of the ESS are to be replaced during the lifetime of the ESS, in particular if these one or more replacement packs are e.g. newer than the other packs and thus often capable of storing more charge (that is, when the state-of-capacity, SoQ, of the one or more replacement packs exceed those of the other packs of the ESS). As a newer pack will often have a higher SoQ and usually also a lower state-of-resistance (SoR) and flatter open-circuit-voltage (OCV) curve, it will, when arranged in parallel with one or more other packs, deliver higher currents than these other packs of the ESS. If the replacement pack is locked down to its expected EoL performance level, the replacement pack will become a bottle neck and limit the overall performance of the ESS to a level lower than what the user may expect.

The present disclosure aims at further developing contemporary ESS solutions and improve at least some of the above-mentioned issues therewith.

### SUMMARY

According to a first aspect of the disclosure, there is provided a computer system that includes processing circuitry. The processing circuitry is configured to obtain a set of state-of-power (SoP) values for a plurality of battery packs of an ESS, wherein the set of SoP values includes at least a lower SoP value for each battery pack. The processing circuitry is further configured to obtain, for each battery pack, one or more first values that are indicative of at least one of a current storage capacity and a current resistance of the battery pack (e.g. indicative of at least one of SoQ and SoR). The processing circuitry is further configured to determine, based on the obtained first values, that the current storage capacity of at least one of the battery packs is significantly larger than those of the one or more other battery packs and/or that the current resistance of the at least one of the battery packs is significantly smaller than those of the one or more other battery packs. The processing circuitry is further configured to then control a discharging and/or charging of the ESS such that the at least one battery pack is operated in accordance with a first power limit that exceeds the lower SoP value of the battery pack, and such that the one or more other battery packs are operated in accordance with power limits that correspond to their lower SoP values. The first aspect of the disclosure may seek to solve the problem of how to more optimally control an ESS wherein one or more of the packs appear to have greater SoQ and/or lower SoR than the one or more other packs. A technical benefit may include that by allowing the e.g. newer packs to operate at higher SoP, the risk of these packs serving as bottle necks may be reduced, and the aging of these packs may e.g. be accelerated such that they catch up with the other packs of the ESS. In particular, the envisaged solution allows to have equal performance over the lifetime of the ESS while still obtaining good performance from/of the ESS in case where e.g. one or more battery packs are replaced during the lifetime of the ESS.

Optionally in some examples, including in at least one preferred example, the first power limit may correspond to a current SoP value of the at least one battery pack, e.g. to an estimated current SoP for the battery pack. A technical benefit may include that the at least one battery pack may thus be operated in accordance with its actual current capability, and not be limited to e.g. the current capabilities of the other packs.

Optionally, in some examples, including in at least one preferred example, the set of SoP values may also include a higher SoP value for each battery pack, and the higher SoP value may be higher than a current SoP value of the at least one battery pack, and e.g. correspond to a non-health conscious limit. The first power limit may correspond to the higher SoP value. A technical benefit may include that the overall performance of the ESS may thus be improved, and that the at least one battery pack may e.g. become homogenous with the other packs more quickly.

Optionally, in some examples, including in at least one preferred example, the set of SoP values may also include a higher SoP value for each battery pack, and the higher SoP value may correspond to a BoL SoP for the corresponding pack. The first power limit may correspond to the higher SoP value. A technical benefit may include that the at least one battery pack may thus be operated in accordance with its BoL SoP value instead of e.g. its EoL SoP value, and thus avoid being a bottleneck for the one or more other battery packs of the ESS.

Optionally, in some examples, including in at least one preferred example, the one or more first values may be values of at least one of SoQ, SoR and remaining lifetime. A technical benefit may include that such values may be particularly useful for determining e.g. that the at least one battery pack is e.g. newer than the one or more other packs.

Optionally, in some examples, including in at least one preferred example, being significantly larger and/or smaller may correspond to being different from a median or average with more than a predefined threshold.

Optionally, in some examples, including in at least one preferred example, differing from the median or average may include differing from the median or average with more than a predefined threshold value.

Optionally, in some examples, including in at least one preferred example, the processing circuitry may be configured to control the discharging and/or charging of the ESS such that the at least one battery pack is operated in accordance with the first power limit in response to determining that the at least one battery pack would act as a bottle-neck of the ESS if operated in accordance with e.g. its lower SoP value. A technical benefit may include that the processing circuitry may thus e.g. determine what packs that would serve as bottle-necks if e.g. operating the ESS under full load, and use that information as an input to deciding what packs to allow for operation on e.g. their current SoP values instead of on e.g. their EoL SoP values, or similar. Other examples may include operating with a weighted average of multiple (such as two) SoP values to meet the given need.

Optionally, in some examples, including in at least one preferred example, the processing circuitry may be configured to control the discharging and/or charging of the ESS such that the at least one battery pack is operated in accordance with the first power limit in response to determining that the at least one battery pack has an expected remaining lifetime that is significantly longer than those of the one or more other battery packs. A technical benefit may include that the computer system may thus be suitable to control the charging and/or discharging also of an ESS with different battery packs that have different aging rates and/or different EoL conditions. The processing circuitry may for example require that both of e.g. the SoQ and remaining lifetime are significantly larger, that both of e.g. the SoQ and remaining lifetime are significantly smaller and larger, respectively, that all of e.g. the SoQ, SoR and remaining lifetime are significantly larger, smaller and larger, respectively, and similar, before allowing the at least one battery pack to operate at its higher indicated SoP value, such as e.g. its current SoP value instead of an EoL SoP value or similar.

Optionally, in some examples, including in at least one preferred example, the first power limit may be interpolated (by the processing circuitry) between the lower SoP value and e.g. the higher SoP value (if included) for the at least one battery pack based on the estimated one or more first values for the at least one battery pack. A technical benefit may include that a smoother transition between the two SoP limits may thus be obtained, e.g. a type of filtering, when e.g. the SoQ, SoR and/or remaining lifetime difference(s) for the at least one battery packs goes from being significant to insignificant.

Optionally, in some examples, including in at least one preferred example, the processing circuitry may be further configured to limit a power input and/or output of the ESS to a limit equal to or proportional to an average of the lower SoP values of the one or more other battery packs times a total number of all battery packs. A technical benefit may include that the ESS may thus be prevented from over-performing (e.g. being operated beyond its safe short- and/or long-term limitations).

Optionally, in some examples, including in at least one preferred example, the one or more first values may include SoR for the at least one battery pack, and the processing circuitry may be further configured to allow the at least one battery pack to operate in accordance with the first limit only if the SoR of the at least one battery pack is below a (predefined) SoR threshold value. A technical benefit may include that operating e.g. a battery pack having a high SoR on its current SoP value instead of its EoL SoP value, may thus be prevented, and thereby reduce the risk of damaging the pack, or similar. Likewise, for a battery pack having a lower SoR, i.e. below a same or other (predefined) SoR threshold value, the battery pack can be allowed to operate on its current SoP value instead of on its EoL SoP value.

Optionally, in some examples, including in at least one preferred example, the lower SoP values may be expected EoL SoP values. A technical benefit may include that the more homogenous packs (in terms of SoQ) may thus be operated at or close to their expected EoL SoP values, in order to e.g. guarantee (or at least attempt to guarantee) that the experienced performance of the ESS remains approximately constant over the lifetime of the ESS.

According to a second aspect of the disclosure, there is provided an ESS that includes the computer system of the first aspect (or any example thereof) and the plurality of battery packs. The second aspect may seek to solve the problem of how to provide an ESS having the improved capabilities described above, by including the computer system of the first aspect to control the charging and/or discharging of the ESS, and the ESS may have the same technical benefits as those described above.

According to a third aspect of the disclosure, there is provided an electric vehicle (such as a semi- or fully-electric vehicle), including the computer system of the first aspect (or any example thereof) and the ESS (and plurality of battery packs). The third aspect may seek to solve the problem of how to provide an electric vehicle having the improved capabilities described above, by including the computer system of the first aspect to control the charging and/or discharging of the vehicle's ESS, such that the vehicle have the same technical benefits as those described above.

According to a fourth aspect of the disclosure, there is provided a (computer-implemented) method. The method includes obtaining, by a processing circuitry of a computer system (such as that of the first aspect), the set of SoP values for the plurality of battery packs of the ESS, wherein the set of SoP values comprises at least the lower SoP value for each battery pack; obtaining, by the processing circuitry and for each battery pack, the one or more first values indicative of at least one of the current storage capacity and the current resistance of the battery pack; determining, by the processing circuitry and based on the obtained first values, that the current storage capacity of at least one of the battery packs is significantly larger than those of the one or more other battery packs and/or that the current resistance of the at least one of the battery packs is significantly smaller than those of the one or more other battery packs, and controlling (S240), by the processing circuitry, the discharging and/or charging of the ESS such that the at least one battery pack is operated in accordance with the first power limit exceeding its lower SoP value and the one or more other battery packs are operated in accordance with power limits corresponding to their lower SoP values. The fourth aspect may seek to solve the problem of how to provide a method to achieve the improvements described above, with the same technical benefits. The method may be performed by the processing circuitry and computer system of the first aspect, and may further include an operations performed by the processing circuitry in any example of the computer system of the first aspect.

According to a fifth aspect of the disclosure, there is provided a computer program product including program code for performing, when executed by the processing circuitry, the method of the fourth aspect. It is also envisaged to provide a computer program including such program code.

According to a sixth aspect of the disclosure, there is provided a computer-readable storage medium including instructions, which when executed by the processing circuitry, cause the processing circuitry to perform the method of the fourth aspect. The storage medium may be non-transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically illustrates various examples of a computer system, according to one or more examples.

FIG. 2 schematically illustrates an example of a method as performed by the computer system of FIG. 1, according to an example.

FIG. 3 schematically illustrates an example SoP-selection functionality as envisaged herein, according to an example.

FIG. 4 schematically illustrates an example electric vehicle, according to an example.

FIG. 5 schematically illustrates an example entity including an ESS, according to an example.

FIG. 6 illustrates is a schematic diagram of an example computer system for implementing examples disclosed herein, according to an example.

## DETAILED DESCRIPTION

The detailed description set forth below provides information and examples of the disclosed technology with sufficient detail to enable those skilled in the art to practice the disclosure.

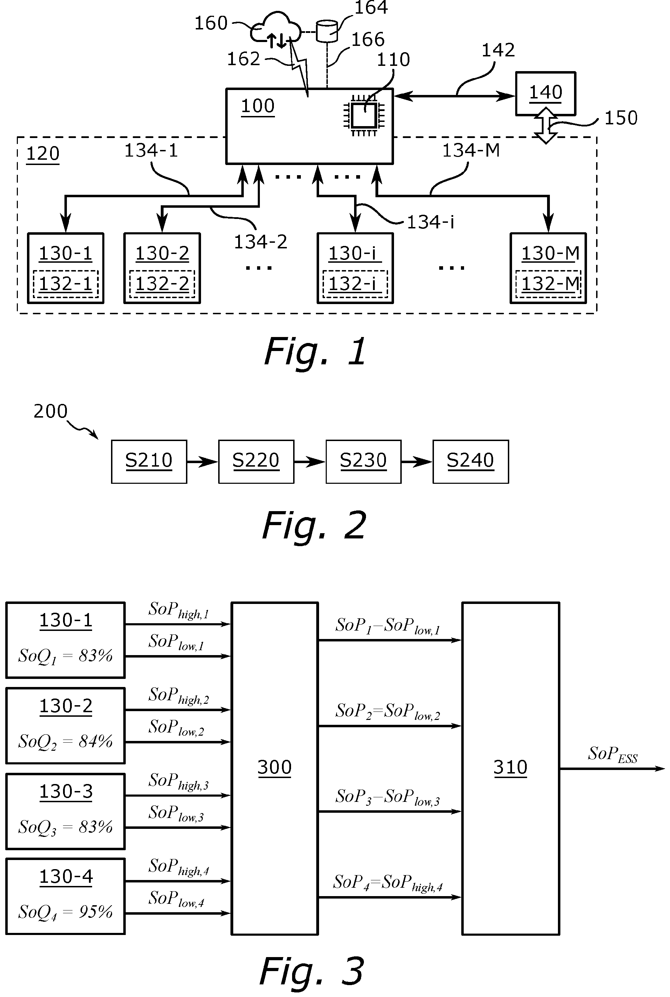

FIG. 1 schematically illustrates one or more examples of a computer system 100 as envisaged herein.

FIG. 2 schematically illustrates a flowchart of one or more (computer-implemented) methods 200 as envisaged herein.

The computer system 100 includes processing circuitry 110. The processing circuitry 110 is configured to obtain (e.g. as part of an operation s210 of the method 200) a set of SoP values for a plurality of battery packs 130-1, 130-2, ..., 130-M (where M indicates a total number of such battery packs, and where the battery packs will also collectively be referred to as just "battery packs 130") of an ESS 120. For example, the processing circuitry 110 may obtain such values from for example one or more battery management units (BMUs) 132-1, 132-2, ..., 132-M (also collectively referred to as BMUs 132), e.g. as part of corresponding signals 134-1, 134-2, ..., 134-M (also collectively referred to as signals 134) exchanged between the processing circuitry 110 and computer system 100 and the various battery packs 130 (and/or their corresponding BMUs 132). In this example, the BMUs 132 (or some other functionality of the battery packs 130) may be responsible for estimating the SoP values. In other examples, the signals 134 may not necessarily include the SoP values themselves, but instead one or more other parameter values of the battery packs 130 from which the processing circuitry 110 may on its own determine/estimate the SoP values.

In particular, the set of SoP values for the battery packs 130 include at least a lower SoP value $SoP_{low,i}$ for each of the battery packs 130, where the index $i \in [1,M]$ indicates the i:th battery pack 130-i. Optionally, the set of SoP values may also include a higher SoP value $SoP_{high,i} > SoP_{low,i}$ for each of the battery packs 130.

As envisaged herein, the number of battery packs 130 is at least two, i.e. $M \geq 2$.

The processing circuitry 110 is further configured to obtain (e.g. as part of an operation S220 of the method 200) one or more first values $\{\theta_i\}$ for each battery pack, wherein these one or more first values are indicative of at least one of a current storage capacity (e.g. SoQ) and a current resistance (e.g. SoR) of the battery pack, e.g. $\theta_i = SoQ_i$, $\theta_i = SoR_i$, $\theta_i = \{SoQ_i, SoR_i\}$, etc. Obtaining such values may for example include to obtain readings (of e.g. voltage and current) from one or more suitable sensors, wherein such sensors may be external or internal to the processing circuitry 110. Generally herein, when referring to the processing circuitry "obtaining" values, it is envisaged that the processing circuitry is thus configured to e.g. obtain such values from one or more suitable sensors and/or from one or more other devices capable of providing such values, and/or that the processing circuitry is configured to obtain one or more other readings (of e.g. one or more other parameters) from which the values of interest can be calculated by the processing circuitry.

The processing circuitry 110 is further configured to determine (e.g. as part of an operation S230 of the method 200), based on the obtained first values $\{\theta_i\}$, that the current storage capacity (e.g. $SoQ_k$) of at least one of the battery packs 130 is significantly larger than those of the one or more other battery packs, and/or that the current resistance (such as the internal resistance, e.g.

$SoR_k$) of the at least one of the battery packs 130 is significantly smaller than those of the one or more other battery packs. For example, the processing circuitry 110 may calculate an average SoQ value $SoQ_{avg}$ for all battery packs 130, a median SoQ value $SoQ_{med}$ for all battery packs 130, and similar, and determine that the SoQ value $SoQ_k$ of a particular k:th battery pack is such that $SoQ_k - SoQ_{avg} \geq SoQ_{T1}$, $SoQ_k - SoQ_{med} \geq SoQ_{T2}$, or similar, where $SoQ_{T1}$ and $SoQ_{T2}$ (that may or may not be equal) are corresponding predefined SoQ threshold values, or similar. Phrased differently, in some example, that e.g. the SoQ value $SoQ_k$ of the particular k:th battery pack is significantly larger than those of the one or more other packs may be determined by such one or more comparisons against a mean, median, or other suitable statistical parameter. The same applies also to the resistance, e.g. if $SoR_{avg} - SoR_k \geq SoR_{T1}$ and/or $SoR_{med} - SoR_k \geq SoR_{T2}$, or similar, where $SoR_{avg}$ and $SoR_{med}$ is the mean and median, respectively, SoR of all battery packs 130, and where $SoR_{T1}$ and $SoR_{T2}$ are corresponding predefined SoR threshold values. Other means of determining whether e.g. the SoR and/or SoQ of the particular battery pack is significantly smaller and/or larger than those of the one or more other battery packs may of course also be used, as suitable.

The processing circuitry 110 is further configured to, in response to determining that the at least one battery pack (e.g. the particular k: th battery pack) has an SoQ and/or SoR that significantly exceeds and/or is below, respectively, those of the one or more other battery packs, control (as part of e.g. an operation S240 of the method 200) a discharging and/or charging of the ESS 120, such that the at least one battery pack is operated in accordance with a first power limit $P_{lim}$ that exceeds the lower SoP value for the at least one battery pack (e.g. $P_{lim} > SoP_{low,k}$), and such that the one or more other battery packs are operated in accordance with power limits $P_{lim,j}$ corresponding to their lower SoP values (e.g. such that $P_{lim,j} = SoP_{low,j}, \forall j \neq k$). As the battery packs 130 are often passive components, this may include the processing circuitry 110 providing one or more suitable control signals 142 to one or more loads and/or sources 140 that consumes and/or provides power 150 from/to the ESS 120. For example, processing circuitry 110 may determine a SoP value $SoP_{ESS}$ for the ESS 120 as a whole, and control the one or more loads and/or sources 140 such that the exchanged power 150 respects the limit defined by $SoP_{ESS}$. For example, if the loads 140 are one or more electrical machines responsible for e.g. providing traction/propulsion of an electric vehicle, the control signal(s) 142 may include suitable commands that limits the power consumption of the one or more electrical machines to stay below or at most $SoP_{ESS}$. As generally envisaged herein, the battery packs 130 are passive devices in the sense that they cannot control their own power output, except from perhaps completely disconnecting themselves from the ESS 120 by for example using one or more suitable switches, breaker and/or bypass devices (such as a pyrofuse or similar). Thus, the power output from each of the battery packs 130 may be assumed to be fully determined/controlled by the power consumers/providers 140. Furthermore, as the battery packs 130 are often connected in parallel on e.g. a same traction voltage (or similar) bus, there is little or no possibility to e.g. allocate a particular consumer and/or provider 140 to a particular one of the battery packs 130, i.e. how the power is split among the different battery packs 130 is not possible to control. Instead, as envisaged herein, the charged and/or discharged power of the battery packs 130 is to be limited by suitable selection of e.g. the value of $SoP_{ESS}$, based on at least the low values $SoP_{low,i}$ and the one or more parameter values $\{\theta_i\}$ as described herein, such that the charged and/or discharged power is limited by operating the consumers and/or providers 140 of the battery packs in accordance with such SoP values.

In some examples, if included, the higher SoP values may correspond to current (e.g. estimated) SoP values of each battery pack 130, such as e.g. to a BoL SoP value $SoP_{BoL,i}$ or similar, and/or to an actual SoP value $SoP_{actual,i}$. In other examples, the higher SoP values may instead be higher than the current (or BoL) SoP value, i.e. such that $SoP_{high,i} > SoP_{actual,i}$ or similar, which would allow the at least one battery pack to perform at a non-safety conscious limit, at least for some time. For example, the first power limit may be selected to match the higher SoP value, e.g. $P_{lim} = SoP_{high,k}$.

In some examples, the lower SoP values may correspond to e.g. EoL SoP values, e.g. such that $SoP_{low,i} = SoP_{EoL,i}$.

As generally envisaged herein, if e.g. replacing one of the battery packs 130 with a new(er) battery pack, it can be assumed that this battery pack will have a different SoQ, OCV curve and/or internal resistance (e.g. SoR) than those of the one or more other battery packs. As all battery packs 130 (if being connected in parallel) are still bound to have a same voltage, a higher SoQ and/or lower SoR of the replacement pack may cause the replacement pack to provide a larger current than the older packs when current is drawn from (or entered into) the ESS 120 as a whole, e.g. as part of the exchange of power 150 between the ESS 120 and the one or more loads and/or sources 140, hence affecting the power split between the battery packs 130. If e.g. operating the replacement pack in accordance with its lower SoP value, e.g. in accordance with its EoL SoP value, the replacement pack is likely to be the first to hit its power limit, with the one or more other, older packs still operating away from their power limits. As the packs are passive and the current/power split among the packs cannot be controlled, there is thus no way to simply e.g. increase the power output or input of the older packs, resulting in an overall power loss (i.e. reduced performance) of the ESS 120 as a whole as only the replacement pack is able to reach its power limit, e.g. its EoL SoP value. The solution provided by the present disclosure however helps to overcome this issue, by instead allowing the replacement pack to operate at its higher SoP level, corresponding to e.g. a current SoP value instead of an EoL SoP value, or similar, which will thus allow for the other packs to reach (or at least get closer) to their lower (e.g. EoL) SoP levels and thus increase the overall power output and performance of the ESS 120 as a whole. It should be noted that the present solution is not necessarily about improving the performance of the ESS 120 to beyond what it would have been if not replacing one of the battery packs 130 with a newer one (i.e. beyond the performance of e.g. a fully homogenous ESS 120), but instead to avoid the performance of the ESS 120 being reduced due to a replacement pack serving as a bottle neck limiting the performance of all other packs.

In some examples, the processing circuitry 110 may be configured to consider a current desired power of the ESS 120 as a whole, e.g. some (estimated) value $P_{ESS}$, and to determine which of the battery packs 130 that would serve as a bottle neck if attempting to operate the ESS 120 in accordance with $P_{ESS}$. The value $P_{ESS}$ may for example correspond to a full loading of the ESS 120. Based on such determination, the processing circuitry 110 may be configured to decide which battery packs that are allowed to operate above their lower SoP limits, and instead at e.g. their current SoP values or similar.

In some examples, the processing circuitry 110 may be configured to also consider limits on allowable SoR, before allowing the corresponding at least one battery pack to operate in accordance with a SoP value that exceeds $SoP_{low,i}$. For example, checks may be performed to confirm that e.g. $SoR_k < SoR_{T3}$ before allowing the $k$:th battery pack to operate at e.g. $SoP_{high,k}$ instead of at e.g. $SoP_{low,k}$, where $SoR_{T3}$ is some (predefined) SoR threshold value. This may e.g. prevent damaging the battery pack, as a high SoR may indicate that the pack is getting old and/or suffering from some other issues.

In some examples, the processing circuitry 110 may be configured to also consider an estimated remaining lifetime of each of the battery packs 130, e.g. some parameter value(s) $\tau_i$. This may be beneficial if e.g. the battery packs 130 are non-homogenous with different aging rates and/or with different EoL conditions. For example, an additional check may be included to confirm that the expected lifetime of the at least one battery pack is significantly longer than that of the one or more other battery packs before allowing the at least one battery pack to operate above its lower SoP value, e.g. by first confirming that $\tau_k - \tilde{\tau} > \tau_{T1}$, where $\tilde{\tau}$ is e.g. a median, average, or similar, of the expected remaining lifetimes of all battery packs, and where $\tau_{T1}$ is a (predefined) lifetime threshold value.

In some examples, the processing circuitry 110 may be configured to prevent the ESS 120 as a whole from over-performing, for example by introducing a limit on $SoP_{ESS}$, e.g. by requiring that $SoP_{ESS} \leq SoP_{lim}$. This limit may for example be equal to or proportional to an average of the lower SoP values of the one or more other battery packs times a total number of all battery packs, e.g. such that

$$SoP_{lim} \propto (or =) \frac{\sum_{i \neq k} SoP_{low,i}}{N_{low}} \times M,$$

where $N_{low}$ is the number of one or more other battery packs that are operated at their lower SoP values, and where $M$ is (as indicated earlier) the total number of all battery packs 130. The SoP value for the ESS 120 as a whole could be selected as e.g. $SoP_{ESS} = SoP_{lim}$.

To control the ESS as a whole in accordance with $SoP_{ESS}$, example solutions may include a conservative solution with e.g. gain-scheduled de-rating, wherein the $SoP_{ESS}$ is determined as

$$SoP_{ESS} = M \cdot \alpha(*) \cdot \min(SoP_i),$$

where $\alpha(*)$ is a scaling-coefficient that is found based on current operating conditions (such as current, temperature, SoC, etc.), and wherein $\min(SoP_i)$ indicates the smallest currently assigned $SoP$ value for any battery pack. Another envisaged, reactive solution may use feedback about an actual current split to adapt $\alpha$, e.g. such that

$$SoP_{ESS} = f(\alpha_i(P_i), SoP_i),$$

i.e. such that the weighting of each SoP for each battery pack (when fusing several individual battery pack SoP values into a single SoP value for the ESS as a whole) is made dependent on how much power the battery pack is currently receiving/providing. For example, if there is a desire to operate the battery pack in accordance with a value $SoP_{ESS}$, feedback about current split and battery pack voltage may be used to check whether each battery pack is delivering at or below its selected SoP value. If not, if assuming that the current split among the battery packs cannot be directly controlled, a solution is then to reduce the desired $SoP_{ESS}$ until all battery packs operate at or below their selected SoP value. With the present invention as disclosed herein, allowing a newer/fresher battery pack to operate at an SoP value higher than its EoL SoP value would thus reduce the risk of this battery pack being the battery pack that exceeds its SoP value and thus forcing a reduction of $SoP_{ESS}$. Phrased differently, a reactive solution as envisaged herein may use feedback about actual current split and battery pack voltage. By assigning a higher $SoP$ (e.g. $SoP_{high}$ instead of $SoP_{low}$) to the at least one battery pack that is expected to provide higher current than the one or more other battery packs, the unutilized power for each pack is thus reduced. The envisaged solution thus enables all battery packs to reach their assigned SoP limits more simultaneously compared to a traditional solution, wherein in the latter case a newer battery pack would likely reach its $SoP_{low}$ value earlier than the one or more other battery packs. Other envisaged solutions for how to "fuse" individual battery pack SoP values into a single SoP value for the ESS as a whole may for example include predictive solutions, using e.g. model-based current split predictions, such as zero-order or e.g. full-order model-based solutions, to predict what the current split is or will be with an avoided or at least reduced need for feedback. Examples of solutions as envisaged herein (for the "fusion" of multiple SoP values into a single $SoP_{ESS}$ are further provided in WO/2021/121673, WO/2021/121672, WO/2020/128068 and/or WO/2021/254620 by the same applicant, documents that are in their entirety incorporated herein by reference.

In some examples, instead of always using the higher SoP value $SoP_{high,k}$ for the at least one battery pack, interpolation may be used to provide a smoother transition between SoP values when a difference of one or more of the first values of the battery pack and those of the one or more other battery packs goes from being significant to insignificant (or the other way around). For example, the SoP value of the at least one battery pack may be decided by interpolating between its lower and higher SoP values, with a weighting factor decided based upon e.g. how significant the difference is, or similar. For example, the at least one battery pack may be operated in accordance with a SoP value $SoP_k$, where this value is found from e.g.

$$SoP_k = \alpha_k SoP_{high,k} + (1 - \alpha_k) SoP_{low,k},$$

where $\alpha_k \in [0,1]$ is a (normalized) weighting factor depending on how much e.g. one or more of $\theta_k$ differs from those of the one or more other battery packs. For example, the weighting factor $\alpha_k$ could be defined by some function $f$ that maps $\theta_k$ and $\theta_i$ to the interval $[0,1]$, i.e. such that $\alpha_k = f(\theta_k, \{\theta_i\})$ and $f{:}\theta_k, s(\{\theta_i\}) \to [0,1]$, where $s(\{\theta_i\})$ is one or more statistics (such as average, mean, etc.) of the one or more first parameter values for all battery packs 130.

Generally herein, wherein something is "estimated", it is assumed that e.g. the processing circuitry 110 has access to and/or implements a suitable estimator, such as for SoQ, SoH and/or SoR, based e.g. on one or more already available solutions. Likewise, estimations and estimators may also be performed/provided for e.g. EoL SoP levels of individual battery packs, and/or such information may be obtained from e.g. laboratory experiments, numerical simulations, manufacturer specifications, or similar.

**FIG. 3** schematically illustrates an example of how different SoP values for different battery packs may be selected based on the one or more first parameter values of the battery packs 130. Here, four battery packs 130-1 to 130-4 are shown, but the ESS 120 may of course include fewer or more battery packs than four, such as two, three, five, six, or more. For this particular example, only the SoQ of each battery pack is considered, i.e. $\{\theta_i\} = \{SoQ_i\}$. At a particular time instance, the SoQ values of each battery pack is as indicated in FIG. 3, i.e. the processing circuitry 110 obtains one or more indications that $SoQ_1 = 0.83$, $SoQ_2 = 0.84$, $SoQ_3 = 0.83$ and $SoQ_4 = 0.95$. The processing circuitry 110 also receives, in this example, higher and lower SoP values for each of the battery packs. By implementing a SoP selection functionality 300, the processing circuitry 110 determines that the SoQ value for the battery pack 130-4 appears to be significantly larger than those of the one or more other battery packs. For example, the processing circuitry 110 may calculate the average of all SoQ values and find that $SoQ_{avg} = 0.8625$, and by comparing the SoQ value of the battery pack 130-4, i.e. $SoQ_4 = 0.95$ against this average value, it is found that the difference is +0.0875, which may be considered to be significantly larger if using e.g. a SoQ threshold value of 0.05, 0.075 or similar. Consequently, it is determined that the battery pack 130-4 is to be operated in accordance with its higher SoP value $SoP_{high,4}$ (or at least in accordance with a SoP value higher than its lower SoP value $SoP_{low,4}$), while the one or more other battery packs (whose SoQ values are closer to the average SoQ value) are to be operated in accordance with their lower SoP values. The SoP selection functionality 300 thus outputs e.g. SoP values $SoP_i$, where $SoP_i = SoP_{low,i}$ if $i \neq 4$ and $SoP_4 = SoP_{high,4}$, or at least $SoP_4 > SoP_{low,4}$. These values may be provided to an ESS SoP determination functionality 310 that may also be implemented by the processing circuitry 110, in which a SoP value $SoP_{ESS}$ for the ESS as a whole is calculated, using e.g. any of the example variants described earlier herein. The processing circuitry 110 then uses $SoP_{ESS}$ to define the power capability for the ESS as a whole, and controls the various loads and/or sources (e.g. 140) such that the power exchange 150 does not go beyond $SoP_{ESS}$. As the battery pack 130-4 is thus allowed to operate above its lower SoP value, that may for example be its EoL SoP value, it will not serve as a bottle-neck and not limit the operation of the one or more other battery packs to below their lower SoP values (such as below their EoL SoP values). In other examples, SoR may be considered instead of, or in addition to SoQ, and/or the expected remaining lifetime of the battery packs may be used as another parameter in order to decide which battery packs to operate at their lower or above their lower SoP values, respectively, in order to not create bottle-necks for the performance of the individual battery packs and the ESS as a whole. For example, the entity 310 may be configured to "fuse" the values $SoP_i$ into $SoP_{ESS}$ by using for example the conservative (gain-scheduled de-rating) solution, the reactive solution or the predictive solution as discussed earlier herein. It is to be noted that the envisaged solution is not necessarily about being able to increase $SoP_{ESS}$ to higher levels than before, but instead about how to avoid e.g. a newer/fresher battery pack becoming a bottle neck due to it hitting its SoP value first (as would be the case if e.g. using the EoL SoP value for the newer/fresher battery pack as is done in conventional solutions). As envisaged herein, higher SoP values may be provided to the functionality 300 for each battery pack, or may be requested from e.g. only the at least one battery pack for which e.g. the SoQ is determined to be significantly different.

As envisaged herein, the present disclosure also provides the combination of the ESS 120 and the computer system 100, or e.g. the computer system 100 as part of the ESS 120. In some examples, the computer system 100 and processing circuitry 110 may be further configured to communicate with e.g. a cloud-based service 160 (via a wireless link 162) and/or with a local and/or a remote storage 164, via e.g. a wireless link such as 162 and/or via one or more wired links 166. The cloud-service 160 and/or storage 164 may be used to store and/or retrieve information as necessitated by the operation of the computer system 100, such as e.g. one or more threshold values use to assess whether a particular battery pack should operate at or above its lower SoP value, and similar, such as e.g. any one of the thresholds described earlier herein. The cloud-service 160 and/or storage 164 may also, in some examples, be used to e.g. communicate a status of the ESS 120, such as e.g. one or more of the first parameter values, the selected SoP values in accordance with which each battery pack is to be operated, the determined SoP value for the ESS as a whole, and similar, to one or more external parties and similar. In yet other examples, it may be envisaged that e.g. one or more or all of e.g. the signals 134-1 to 134-M, and/or 142, are provided via the cloud-service 160 and/or storage 164, or similar, i.e. the computer system 100 may also be remotely located and still be able to e.g. obtain the required indications about the ESS 120 and battery packs 130, and/or to control the one or more loads and/or sources 140 in accordance with the SoP value for the ESS 120 as a whole, and similar. Generally herein, although illustrated in FIG. 1 as a central entity, the computer system 100 may be distributed over a plurality of different processing circuitry, wherein e.g. communication between such different (physical or logical) entities is provided via e.g. a network, a bus, or similar. The one or more processing circuitry may for example receive indications of all required parameter values directly from one or more other entities, such as from one or more BMUs, and then only perform the various determining operations. In other examples, the one or more processing circuitry may instead obtain the required indications by own calculations, based on one or more other parameter values of the ESS 120 and/or battery packs 130 from which such indications may be derived. In some examples, there may not necessarily be any central processing circuitry such as 110, and the functionality required to perform the solution as envisaged herein may instead be distributed among e.g. the BMUs 132 or similar, or there may e.g. be a central coordinating entity responsible only for e.g. coordinating which other entity (such as which other BMU) that is responsible for performing which part of the solution, and e.g. to gather the results from such other entities and determine and control the one or more loads and/or sources 140, and similar.

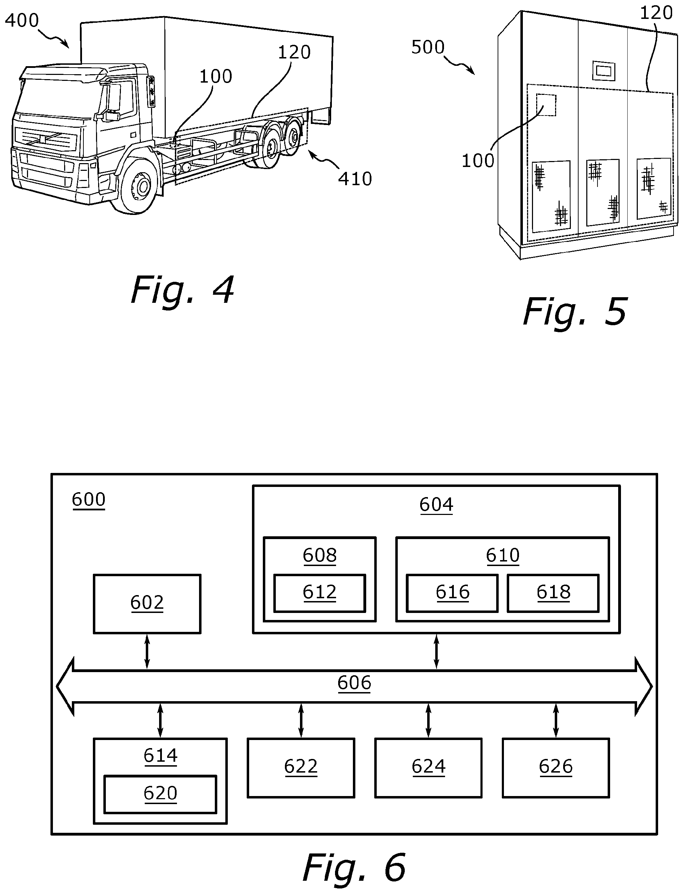

**FIG. 4** schematically illustrates an example of an electric (heavy-duty) vehicle as envisaged herein, here in form of a box cargo truck 400. The truck 400 includes the computer system 100 as described herein, the ESS 120, and the ESS 120 is controlled by the computer system 100 in order to e.g. provide power to a traction/propulsion system 410 of the truck 400, wherein the system 410 may include e.g. one or more electrical machines for providing torque to one or more wheels of the truck 400, and similar. FIG. 4 serves to illustrate one of many possible example vehicles, and the present disclosure is not limited only to vehicles of the type shown in FIG. 4. For example, a vehicle as envisaged herein may be a truck, a semitrailer, a vehicle combination (of a tractor unit and one or more trailers), a bus, a tractor, a piece of heavy machinery such as a wheel loader, articulated hauler/dump truck, or any type of vehicle or machine that is at least partially electric and which includes an ESS that may benefit from being controlled by the solution of the present disclosure, including also e.g. electrically powered marine vessels, trams, trains, aircraft, and similar.

**FIG. 5** schematically illustrates another example of an entity including an ESS as envisaged herein, here in form of a battery bank 500 configured to deliver (or receive) energy to (or from) a power grid, as part of e.g. a backup- and/or ancillary service. The battery bank 500 includes the computer system 100 and the ESS 120. The battery bank 500 may for example be installed as part of the power grid itself, and/or be provided e.g. as part of a building or similar. The battery bank 500 may for example include one or more energy storage elements (such as battery packs) that have been harvested from e.g. an electric vehicle, representing so-called "second use" wherein e.g. battery packs that are no longer considered useful in electric vehicles may still be used in other, less demanding applications, such as home energy storage solutions, off-grid solutions, grid solutions, and similar, but where e.g. replacement of one or more battery packs with e.g. one or more newer battery packs may lead to the issues of reduced overall ESS performance if not attended to in accordance with the solution presented herein. In particular, FIG. 5 and the battery bank 500 serve to illustrate that the computer system 100 (and method 200 performed therein) as envisaged herein is not necessarily applicable only to electric (heavy-duty) vehicles, but may find use in any situation in which there is an ESS wherein e.g. replacement of one or more battery packs may result in sub-optimal ESS performance using conventional technology only.

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hardcoded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of all of the above, the present disclosure thus provides an improved solution of controlling an ESS, wherein the ESS may e.g. be locked to an EoL performance to avoid user-noticeable degradation of performance with time, and where e.g. replacing one or more of the battery packs of the ESS do not cause bottleneck effects as in contemporary solutions. Instead of maxing out only a newer battery pack while keeping the one or more other battery packs from reaching their intended power limits, the idea of allowing the newer battery pack to instead operate at a higher power level (in accordance with a higher SoP value) allows avoids the newer battery pack becoming a bottle neck, and allows the other packs to operate at their intended power levels and avoids reducing the overall output/performance of the ESS because of the replacement of the one or more battery packs.

As a general comment applying to all of the above, it is noted that instead of SoP, the same or similar solution may instead be used to control state-of-current, e.g. with an assumption that current is an indicative measure of power. Such examples may of course be less accurate as voltage does not remain constant as energy is withdrawn/added from/to the battery packs, but may in some situations be sufficiently accurate. In such examples, the terms "SoP" and "power" may then be replaced by "state-of-current" and "current", respectively, and similar. For example, a goal of the solution may then be to allow the newer/fresher battery pack to operate at a current higher than some threshold value, and to allow the other one or more battery packs to operate at currents equal to this threshold value. For example, if using feedback control as described herein, the voltage may be disregarded and control of the total current drawn from/-provided to the ESS may be controlled such that no battery pack provides/is delivered more current than its SoC limit value.

The following is a non-exhaustive list of examples as envisaged herein:

Example 1: A computer system including processing circuitry configured to: obtain a set of state-of-power, SoP, values for a plurality of battery packs of an energy storage system, ESS, wherein the set of SoP values includes at least a lower SoP value for each battery pack; obtain, for each battery pack, one or more first values indicative of at least one of a current storage capacity and a current resistance of the battery pack; determine, based on the obtained first values, that the current storage capacity of at least one of the battery packs is significantly larger than those of the one or more other battery packs and/or that the current resistance of the at least one of the battery packs is significantly smaller than those of the one or more other battery packs, and control a discharging and/or charging of the ESS such that the at least one battery pack is operated in accordance with a first power limit exceeding its lower SoP value and the one or more other battery packs are operated in accordance with power limits corresponding to their lower SoP values.

Example 2: The computer system of example 1, wherein the set of SoP values also includes a higher SoP value for each battery pack.

Example 3: The computer system of example 2, wherein the higher SoP value corresponds to a current SoP value of the at least one battery pack.

Example 4: The computer system of example 2, wherein the higher SoP value is higher than a current SoP value of the at least one battery pack.

Example 5: The computer system of any one of examples 2 to 4, wherein the first power limit corresponds to the higher SoP value.

Example 6: The computer system of any one of examples 1 to 5, wherein the one or more first values are values of at least one of state-of-capacity, SoQ, state-of-resistance, SoR, and remaining lifetime.

Example 7: The computer system of any one of the preceding examples, wherein being significantly larger and/or smaller corresponds to differing from a median or average with more than a predefined threshold value, such as being larger or smaller than the median or average with more than a predefined threshold value.

Example 8: The computer system of any one of the preceding examples, wherein the processing circuitry is configured to control the discharging and/or charging of the ESS such that the at least one battery pack is operated in accordance with the first power limit in response to determining at least one of i) that the at least one battery pack would act as a bottleneck of the ESS if operated in accordance with its lower SoP value and ii) that the at least one battery pack has an expected remaining lifetime that is significantly longer than those of the one or more other battery packs.

Example 9: The computer system of any one of the preceding examples depending on example 2, wherein the first power limit is interpolated between the lower SoP value and the higher SoP value for the at least one battery pack based on the estimated one or more first values for the at least one battery pack.

Example 10: The computer system of any one of the preceding examples, wherein the processing circuitry is further configured to limit a power input and/or output of the ESS as a whole to a limit equal or proportional to an average of the lower SoP values of the one or more other battery pack times a total number of all battery packs.

Example 11: The computer system of any one of the preceding examples, wherein the one or more first values include state-of-resistance, SoR, for the at least one battery pack, and wherein the processing circuitry is further configured to allow the at least one battery pack to operate in accordance with the first limit only if the SoR of the at least one battery pack is below an SoR threshold value.

Example 12: The computer system of any one of the preceding examples, wherein the lower SoP values are expected end-of-life, EoL, SoP values.

Example 13: The computer system of any one of the preceding examples depending on example 2, wherein the higher SoP values are (expected or actual) beginning-of-life, BoL, SoP values.

Example 14: The computer system of any one of the preceding examples, wherein state-of-current is used to approximate SoP.

Example 15: The computer system of example 14, further including the use of assumed constant battery pack voltages to approximate SoP.

Example 16: An energy storage system, ESS, including the computer system of any one of examples 1 to 15 and the plurality of battery packs.

Example 17: An electric vehicle, including the computer system of any one of examples 1 to 15 and the energy storage system, ESS.

Example 18: A computer-implemented method, including: obtaining, by a processing circuitry of a computer system, a set of state-of-power, SoP, values for a plurality of battery packs of an energy storage system, ESS, wherein the set of SoP values includes at least a lower SoP value for each battery pack; obtaining, by the processing circuitry and for each battery pack, one or more first values indicative of at least one of a current storage capacity and a current resistance of the battery pack; determining, by the processing circuitry and based on the obtained first values, that the current storage capacity of at least one of the battery packs is significantly larger than those of the one or more other battery packs and/or that the current resistance of the at least one of the battery packs is significantly smaller than those of the one or more other battery packs, and controlling, by the processing circuitry, a discharging and/or charging of the ESS such that the at least one battery pack is operated in accordance with a first power limit exceeding its lower SoP value and the one or more other battery packs are operated in accordance with power limits corresponding to their lower SoP values.

Example 19: A computer program including program code for performing, when executed by the processing circuitry, the method of example 18.

Example 20: A computer program product including program code for performing, when executed by the processing circuitry, the method of example 18.

Example 21: A non-transitory computer-readable storage medium including instructions, which when executed by the processing circuitry, cause the processing circuitry to perform the method of example 18.

**Claims**

1. A computer system (100) comprising processing circuitry (110) configured to:

    - obtain a set of state-of-power, SoP, values for a plurality of battery packs (130-1, ...,130-M) of an energy storage system, ESS (120), wherein the set of SoP values comprises at least a lower SoP value ($SoP_{low,i}$) for each battery pack;
    - obtain, for each battery pack, one or more first values indicative of at least one of a current storage capacity and a current resistance of the battery pack;
    - determine, based on the obtained first values, that the current storage capacity of at least one of the battery packs is significantly larger than those of the one or more other battery packs and/or that the current resistance of the at least one of the battery packs is significantly smaller than those of the one or more other battery packs, and

    - control a discharging and/or charging (150) of the ESS such that the at least one battery pack is allowed to operate in accordance with a first power limit exceeding its lower SoP value and the one or more other battery packs are allowed to operate in accordance with power limits corresponding to their lower SoP values.

2. The computer system of claim 1, wherein the set of SoP values also comprises a higher SoP value ($SoP_{high,k}$) for the at least one battery pack, wherein the higher SoP value corresponds to a current SoP value of the at least one battery pack, and wherein the first power limit corresponds to the higher SoP value of the at least one battery pack.

3. The computer system of claim 1, wherein the set of SoP values also comprises a higher SoP value ($SoP_{high,k}$) for the at least one battery pack, wherein the higher SoP value is higher than a current SoP value of the at least one battery pack, and wherein the first power limit corresponds to the higher SoP value of the at least one battery pack.

4. The computer system of any one of claims 1 to 3, wherein the one or more first values are values of at least one of state-of-capacity, SoQ, state-of-resistance, SoR, and remaining lifetime.

5. The computer system of any one of the preceding claims, wherein being significantly larger and/or smaller corresponds to differing from a median or average with more than a predefined threshold value, such as being larger or smaller than the median or average with more than a predefined threshold value.

6. The computer system of any one of the preceding claims, wherein the processing circuitry is configured to control the discharging and/or charging of the ESS such that the at least one battery pack is allowed to operate in accordance with the first power limit in response to determining at least one of i) that the at least one battery pack would act as a bottle-neck of the ESS if operated in accordance with its lower SoP value and ii) that the at least one battery pack has an expected remaining lifetime that is significantly longer than those of the one or more other battery packs.

7. The computer system of any one of the preceding claims, wherein the set of SoP values also comprises a higher SoP value ($SoP_{high,k}$) for the at least one battery pack, and wherein the first power limit is interpolated between the lower SoP value and the higher SoP value for the at least one battery pack based on the estimated one or more first values for the at least one battery pack.

8. The computer system of any one of the preceding claims, wherein the processing circuitry is further configured to limit a power input and/or output of the ESS as a whole to a limit equal or proportional to an average of the lower SoP values of the one or more other battery packs times a total number of all battery packs.

9. The computer system of any one of the preceding claims, wherein the one or more first values comprise state-of-resistance, SoR, for the at least one battery pack, and wherein the processing circuitry is further configured to allow the at least one battery pack to operate in accordance with the first limit only if the SoR of the at least one battery pack is below an SoR threshold value.

10. The computer system of any one of the preceding claims, wherein the lower SoP values are expected end-of-life, EoL, SoP values.

11. An energy storage system, ESS (120), comprising the computer system (100) of any one of claims 1 to 10 and the plurality of battery packs (130-1, ...,130-M).

12. An electric vehicle, comprising the computer system of any one of claims 1 to 10 and the energy storage system, ESS.

13. A computer-implemented method (200), comprising:

- obtaining (S210), by a processing circuitry of a computer system, a set of state-of-power, SoP, values for a plurality of battery packs of an energy storage system, ESS, wherein the set of SoP values comprises at least a lower SoP value ($SoP_{lower,i}$) for each battery pack;
- obtaining (S220), by the processing circuitry and for each battery pack, one or more first values indicative of at least one of a current storage capacity and a current resistance of the battery pack;
- determining (S230), by the processing circuitry and based on the obtained first values, that the current storage capacity of at least one of the battery packs is significantly larger than those of the one or more other battery packs and/or that the current resistance of the at least one of the battery packs is significantly smaller than those of the one or more other battery packs, and

- controlling (S240), by the processing circuitry, a discharging and/or charging of the ESS such that the at least one battery pack is allowed to operate in accordance with a first power limit exceeding its lower SoP value and the one or more other battery packs are allowed to operate in accordance with power limits corresponding to their lower SoP values.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

**Amended claims in accordance with Rule 137(2) EPC.**

1. A computer system (100) comprising processing circuitry (110) configured to:

- obtain a set of state-of-power, SoP, values for a plurality of battery packs (130-1, ...,130-M) of an energy storage system, ESS (120), wherein the set of SoP values comprises at least a lower SoP value ($SoP_{low,i}$) for each battery pack, wherein the lower SoP value for each battery pack is an expected end-of-life, EoL, SoP value for the battery pack;
- obtain, for each battery pack, one or more first values indicative of at least one of a current storage capacity and a current resistance of the battery pack;
- determine, based on the obtained first values, that the current storage capacity of at least one of the battery packs is significantly larger than those of the one or more other battery packs and/or that the current resistance of the at least one of the battery packs is significantly smaller than those of the one or more other battery packs, wherein being significantly larger and/or smaller corresponds to differing from a median or average with more than a predefined threshold value, and
- control a discharging and/or charging (150) of the ESS such that the at least one battery pack is allowed to operate in accordance with a first power limit exceeding its lower SoP value and the one or more other battery packs are allowed to operate in accordance with power limits corresponding to their lower SoP values.

2. The computer system of claim 1, wherein the set of SoP values also comprises a higher SoP value ($SoP_{high,k}$) for the at least one battery pack, wherein the higher SoP value corresponds to a current SoP value of the at least one battery pack, and wherein the first power limit corresponds to the higher SoP value of the at least one battery pack.

3. The computer system of claim 1, wherein the set of SoP values also comprises a higher SoP value ($SoP_{high,k}$) for the at least one battery pack, wherein the higher SoP value is higher than a current SoP value of the at least one battery pack, and wherein the first power limit corresponds to the higher SoP value of the at least one battery pack.

4. The computer system of any one of claims 1 to 3, wherein the one or more first values are values of at least one of state-of-capacity, SoQ, state-of-resistance, SoR, and remaining lifetime.

5. The computer system of any one of the preceding claims, wherein the processing circuitry is configured to control the discharging and/or charging of the ESS such that the at least one battery pack is allowed to operate in accordance with the first power limit in response to determining at least one of i) that the at least one battery pack would act as a bottle-neck of the ESS if operated in accordance with its lower SoP value and ii) that the at least one battery pack has an expected remaining lifetime that is significantly longer than those of the one or more other battery packs.

6. The computer system of any one of the preceding claims, wherein the set of SoP values also comprises a higher SoP value ($SoP_{high,k}$) for the at least one battery pack, and wherein the first power limit is interpolated between the lower SoP value and the higher SoP value for the at least one battery pack based on the estimated one or more first values for the at least one battery pack.

7. The computer system of any one of the preceding claims, wherein the processing circuitry is further configured to limit a power input and/or output of the ESS as a whole to a limit equal or proportional to an average of the lower SoP values of the one or more other battery packs times a total number of all battery packs.

8. The computer system of any one of the preceding claims, wherein the one or more first values comprise state-of-resistance, SoR, for the at least one battery pack, and wherein the processing circuitry is further configured to allow the at least one battery pack to operate in accordance with the first limit only if the SoR of the at least one battery pack is below an SoR threshold value.

9. An energy storage system, ESS (120), comprising the computer system (100) of any one of claims 1 to 8 and the plurality of battery packs (130-1, ...,130-M).

10. An electric vehicle, comprising the computer system of any one of claims 1 to 10 and the energy storage system, ESS.

11. A computer-implemented method (200), comprising:

- obtaining (S210), by a processing circuitry of a computer system, a set of state-of-power, SoP, values for a plurality of battery packs of an energy storage system, ESS, wherein the set of SoP values comprises at least a lower SoP value ($SoP_{lower,i}$) for each battery pack, wherein the lower SoP value for each battery pack is an expected end-of-life, EoL, SOP value for the battery pack ;
- obtaining (S220), by the processing circuitry and for each battery pack, one or more first values indicative of at least one of a current storage capacity and a current resistance of the battery pack;
- determining (S230), by the processing circuitry and based on the obtained first values, that the current storage capacity of at least one of the battery packs is significantly larger than those of the one or more other battery packs and/or that the current resistance of the at least one of the battery packs is significantly smaller than those of the one or more other battery packs, , wherein being significantly larger and/or smaller corresponds to differing from a median or average with more than a predefined threshold value, and
- controlling (S240), by the processing circuitry, a discharging and/or charging of the ESS such that the at least one battery pack is allowed to operate in accordance with a first power limit exceeding its lower SoP value and the one or more other battery packs are allowed to operate in accordance with power limits corresponding to their lower SoP values.

12. A computer program product comprising program code for performing, when executed by the processing circuitry, the method of claim 11.

13. A non-transitory computer-readable storage medium comprising instructions, which when executed by the processing circuitry, cause the processing circuitry to perform the method of claim 11.

Fig. 1

Fig. 2

Fig. 3

Fig. 4

Fig. 5

Fig. 6

<table>
<tr><td></td><td></td></tr>
</table>

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2020 210197 A1 (SIEMENS AG [DE]) 17 February 2022 (2022-02-17) * paragraphs [0022] - [0035] * ----- | 1-15 | INV. H02J7/00 B60L58/16 B60L58/18 |
| A | US 2022/344959 A1 (SHARMA RATNESH [US] ET AL) 27 October 2022 (2022-10-27) * paragraphs [0014] - [0044] * ----- | 1-15 | |
| A | US 2022/294036 A1 (SHARMA RATNESH [US] ET AL) 15 September 2022 (2022-09-15) * paragraphs [0007] - [0020] * ----- | 1-15 | |

TECHNICAL FIELDS SEARCHED (IPC)

H02J
B60L

The present search report has been drawn up for all claims

| Place of search | Date of completion of the search | Examiner |
|---|---|---|
| Munich | 14 April 2025 | Berger, Josef |

EPO FORM 1503 03.82 (P04C01)

## ANNEX TO THE EUROPEAN SEARCH REPORT
## ON EUROPEAN PATENT APPLICATION NO.

EP 24 21 4196

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | | Publication date |
|---|---|---|---|---|
| DE 102020210197 A1 | 17-02-2022 | NONE | | |
| US 2022344959 A1 | 27-10-2022 | CN | 115250001 A | 28-10-2022 |
| | | US | 2022344959 A1 | 27-10-2022 |
| US 2022294036 A1 | 15-09-2022 | CN | 115085387 A | 20-09-2022 |
| | | EP | 4060851 A1 | 21-09-2022 |
| | | US | 2022294036 A1 | 15-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021121673 A
- WO 2021121672 A
- WO 2020128068 A
- WO 2021254620 A